# EUROPÄISCHE PATENTSCHRIFT

(11) **EP 2 548 295 B1**
(45) Veröffentlichungstag und Bekanntmachung des Hinweises auf die Patenterteilung: **07.08.2019**
(21) Anmeldenummer: 11709403.7
(22) Anmeldetag: 21.03.2011
(51) Int. Cl.: H02M 3/337, H05B 33/08

(54) **LED-BETRIEBSSCHALTUNG MIT ADAPTIVEM ISOLIERENDEN DC/DC-WANDLER**
LED OPERATING CIRCUIT COMPRISING AN ADAPTIVE INSULATING DC/DC-CONVERTER
CIRCUIT DE COMMANDE DE DEL COMPRENANT UN CONVERTISSEUR CC/CC ISOLANT

(30) Priorität: 12.07.2010 DE 102010031233; 19.03.2010 DE 102010003061
(43) Veröffentlichungstag der Anmeldung: 23.01.2013
(73) Patentinhaber: Tridonic AG, 8755 Ennenda (CH)
(72) Erfinder: ZIMMERMANN, Michael, CH-8888 Heiligkreuz (CH); PEREIRA, Eduardo, CH-8854 Siebnen (CH)
(74) Vertreter: Rupp, Christian
(86) Internationale Anmeldenummer: PCT/EP2011/054242
(87) Internationale Veröffentlichungsnummer: WO 2011/113960

(56) Entgegenhaltungen:
- WO-A2-2008/152565
- DE-A1-102006 022 819
- US-A1- 2005 035 729
- US-A1- 2009 207 635
- US-A1- 2009 316 442
- US-B1- 7 313 004
- ANONYMOUS: "L6599 - High-voltage resonant controller", INTERNET CITATION, 15. Mai 2006 (2006-05-15), Seiten 1-36, XP002525804, Gefunden im Internet: URL:http://www.ed-china.com/ARTICLES/2006J UL/3/2006JUL11_PM_POW_OT.pdf?SO URCES=DOWNLOAD [gefunden am 2006-05-15]

## Beschreibung

Die vorliegende Erfindung bezieht sich eine Spannungsversorgung zum Betrieb von LEDs, wobei darunter anorganische LEDs wie auch organische LEDs (OLEDs) zu verstehen sind.

Grundsätzlich ist es bereits bekannt, eine LED-Strecke, die eine oder mehrere in Serie geschaltete LEDs aufweisen kann, ausgehend von einer Konstantstromquelle mit elektrischer Leistung zu versorgen. Es ist ebenfalls bekannt, zur Ausführung eines Dimmens eine PWM-Modulation zu verwenden, so dass in den Einschaltzeitdauern eines PWM-Impulszugs die genannte Konstantstromregelung durchgeführt wird. Beim Dimmen wird also dann das Tastverhältnis des PWM-Signals verändert.

Zur Bereitstellung der Versorgungsspannung der Konstantstromquelle kann beispielsweise eine aktiv getaktete PFC-Schaltung (Power Factor Correction Circuit, Leistungsfaktorkorrekturschaltung) verwendet werden. Schließlich sind auch noch weitere Anforderungen beim Betrieb von LEDs zu beachten, beispielsweise dass üblicherweise eine galvanische Trennung zwischen der LED-Strecke und der Versorgungspannung des PFCs, typischerweise eine Netzwechselspannung, gefordert wird.

Die Druckschrift WO 2008/152565 A2 betrifft eine Versorgungsschaltung zum Zuführen eines Ausgangssignals zu einer Last, insbesondere zum Zuführen eines Ausgangsgleichstroms zu einer elektronischen Lampeneinheit. Ferner betrifft die Druckschrift WO 2008/152565 A2 ein entsprechendes Verfahren zum Zuführen eines Ausgangssignals.

Die Druckschrift DE 102006022819 A1 betrifft eine Schaltungsanordnung, welche einen Wandler zur Erzeugung eines AC Signals aus einer Energie aus einer Energiequelle, einen Piezotransformator, dessen Eingang mit dem Konverter verbunden ist und dessen Ausgang dazu konfiguriert ist, den Ausgangsstrom bereitzustellen, und eine Last, die mit dem Piezotransformatorausgang gekoppelt ist, um den Ausgangsstrom in eine andere Form von Nutzenergie umzuwandeln, aufweist. Die Schaltungsanordnung stellt den Ausgangsstrom auf einen definierten Wert ein.

Die Druckschrift US2009/207635 A1 betrifft eine Stromversorgung. Insbesondere betrifft die Druckschrift US2009/207635 A1 einen Bereitschaftsbetriebsmodus einer Energieversorgung vom resonanten Typ. Darüber hinaus betrifft diese Druckschrift eine Standby-Stromversorgung einer resonanten Art von Stromversorgung, die geringe Leistungsverluste bei geringen bis keinen zusätzlichen Kosten aufweist.

Aus dem obigen ergibt sich, dass zu einem, ordnungsgemäßen und vorteilhaften Betrieb einer LED-Strecke funktional mehrere Schaltungsblöcke vorliegen müssen (Gleichrichter, PFC, galvanische Trennung, Konstantstromquelle etc.). Dies führt gegebenenfalls zu relativ komplexen Schaltungen.

Die Erfindung bezieht sich auf die Bereitstellung einer DC-Spannung für eine LED-Betriebsschaltung.

Diese Aufgabe wird gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung sieht eine LED-Betriebsschaltung mit einem isolierenden energieübertragenden DC/DC-Wandler mit den Merkmalen des Anspruchs 1 vor.

Die Erfindung betrifft weiterhin ein Verfahren zum Betrieb einer LED-Betriebsschaltung mit einem isolierenden energieübertragenden DC/DC-Wandler mit den Merkmalen des unabhängigen Anspruchs 3.

Die Erfindung bezieht sich auch auf eine integrierte Steuerschaltung, insbesondere ASIC oder Mikrokontroller, mit den Merkmalen des Anspruchs 5.

Weitere Vorteile, Merkmale und Eigenschaften der Erfindung werden aus der folgenden Beschreibung bevorzugter Ausführungsbeispiele und unter Bezugnahme auf die beigefügten Figuren ersichtlich werden.
Fig. 1 zeigt den Aufbau eines modularen LED-Beleuchtungssystems.
Fig. 2 zeigt ein Ausführungsbeispiel für einen erfindungsgemäßen isolierten DC/DC-Wandler, in Form eines Wechselrichters mit folgerndem Resonanzkreis und Transformator.
Fig. 3 schematisch Steuermodi für den DC/DC-Wandler von Figur 2.
Fig. 4 zeigt die Kommunikation zwischen einer Mastereinheit und mehreren Slave-Einheiten des modularen LED-Beleuchtungssystems.
Fig. 5 zeigt die Erzeugung einer DC-Niedervoltspannung.
Fig. 6a und 6b zeigen das LED-Modul mit mehreren voneinander unabhängigen steuerbaren Kanälen.

### Allgemeiner Aufbau des modularen Schaltungskonzepts:

Es soll nunmehr der allgemeine Aufbau des modularen Schaltungskonzepts für eine LED-basierte Beleuchtung, beispielsweise für ein sogenanntes 'Downlight' (in die Decke eingelassener Strahler) erläutert werden. Es können sowohl anorganische LEDs und / oder organische LEDS (OLED) eingesetzt werden.

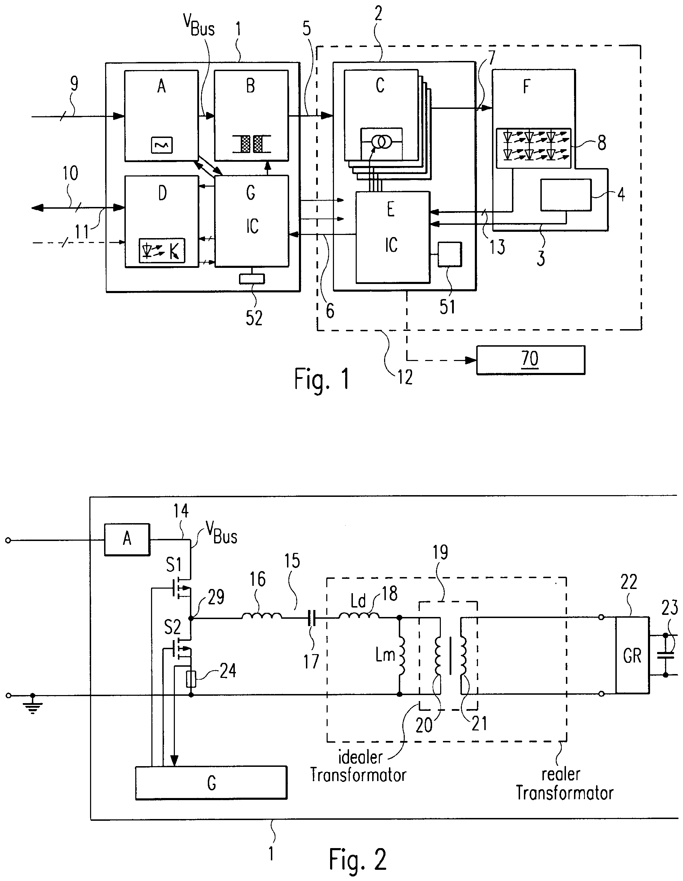

Wie in Figur 1 ersichtlich, weist das modulare Schaltungskonzept ein erstes Modul 1 auf, das vorzugsweise mit der Eingangsspannung 9, insbesondere Netz-Wechselspannung, versorgt ist. Diese Eingangsspannung 9 wird einem ersten Untermodul A zugeführt, das typischerweise eine Gleichrichtung der als Eingangsspannung 9 zugeführten Wechselspannung ausführt, wobei dann die gleichgerichtete Wechselspannung einer aktiv getakteten PFC (Power Factor Correction)-Schaltung des Untermoduls A, falls vorhanden, zugeführt wird. Die Ausgangsspannung des ersten Untermoduls A ist eine DC-Spannung, im Folgenden 'Busspannung V_{Bus}' genannt, die einem zweiten Untermodul B des ersten Moduls 1 zugeführt wird. Das zweite Untermodul B weist im Wesentlichen die Funktion einer galvanischen Trennung (Isolierung) auf und kann dazu beispielsweise als galvanisches Trennelement einen Transformator aufweisen. Zusätzlich dient das zweite Untermodul B zur Bereitstellung einer stabilisierten Gleichspannung, der DC-Versorgungsspannung 5.

Mit dem Untermodul G ist eine Steuereinheit des Moduls 1 bezeichnet, die insbesondere als integrierte Schaltung, wie beispielsweise ASIC oder Mikroprozessor bzw. Hybrid davon implementiert sein kann. Wie schematisch in Figur 1 gezeigt, steuert diese Steuereinheit G aktive Schaltelemente des zweiten Untermoduls B an, die beispielsweise in Form einer Halbbrücke (beispielsweise eines Halbbrückentreibers und zweier Schalter in Serie, siehe im Folgenden Fig. 2) ausgestaltet sein können, der eine den Transformator 19 des zweiten Untermoduls B zugeführte Wechselspannung erzeugt. Die Steuereinheit G kann über Programmiereingänge verfügen, wodurch eine Programmierung oder Kalibrierungsprogrammierung der Steuereinheit G möglich ist. Dafür können die Anschlüsse der Steuereinheit G auf die Platine des zweiten Untermoduls B herausgeführt werden, um eine Programmierung dieses Untermoduls B und somit der Steuereinheit G auch nach Auslieferung des Untermoduls B zu ermöglichen.

Mit dem zweiten Untermodul B des ersten Moduls 1 ist eine galvanische Entkopplung bezeichnet, über die die Steuereinheit G des Moduls 1 mit dem Untermodul D als Schnittstellenschaltung kommuniziert. Diese Schnittstellenschaltung D kann eine Datenschnittstelle 11 aufweisen, die insbesondere zur Anbindung eines externen analogen oder digitalen Busses 10, beispielsweise gemäß dem DALI-Industriestandard, ausgebildet sein kann. Alternativ oder zusätzlich können aber auch unidirektionale oder bidirektionale Signale an dieser Datenschnittstelle 11 bzw. Schnittstellenschaltung D gemäß anderen Standards übertragen werden. Weiterhin können an dieser Datenschnittstelle 11 bzw. Schnittstellenschaltung D alternativ oder zusätzlich Signale empfangen werden, die ausgehend von einem durch die Datenschnittstelle 11 bzw. Schnittstellenschaltung D selbst oder extern (beispielsweise ebenfalls über die Eingangsspannung 9) versorgten manuell zu betätigenden Taster oder Schalter erzeugt werden.

Die wesentlichen Funktionen des ersten Moduls 1 sind somit die erfindungsgemäße Bereitstellung (am Ausgang des zweiten Untermoduls B) einer DC-Spannung (durch Gleichrichtung der Ausgangsspannung des Transformators 19 des zweiten Untermoduls B mit dem Gleichrichter 22) ausgehend von einer zugeführten Eingangsspannung 9 sowie die externe Kommunikation über die Datenschnittstelle 11 bzw. Schnittstellenschaltung D.

Vorzugsweise räumlich getrennt von dem genannten ersten Modul 1 ist ein zweites Modul 2 als Schaltungsmodul vorgesehen. Dieses zweite Modul 2 hat im Wesentlichen die Funktion des sogenannten 'Lampenmanagements', was bedeutet, dass dieses zweite Modul 2 einerseits die angeschlossenen Leuchtmittel (hier die LED-Strecke 8 mit einer oder mehreren LEDs) mit Konstantstrom versorgt und andererseits Rückführgrößen (schematisch mit 13 bezeichnet) aus dem Bereich der LED-Strecke 8 erhält.

Die DC-Versorgungsspannung 5 am Ausgang des zweiten Untermoduls B des ersten Moduls 1 wird also einem weiteres Untermodul C, als steuer-/regelbaren Konstantstromquelle, zugeführt. Dieses weitere Untermodul C versorgt also über einen Ausgang 7 die LED-Strecke mit Konstantstrom. Das zweite Modul 2 kann dabei mehrere Konverterstufen (mehrere weitere Untermodule C als Konstantstromquellen) enthalten, wobei diese Konverterstufen (weitere Untermodule C als Konstantstromquellen) jeweils voneinander getrennte (unabhängige) LED-Strecken 8 ansteuern können.

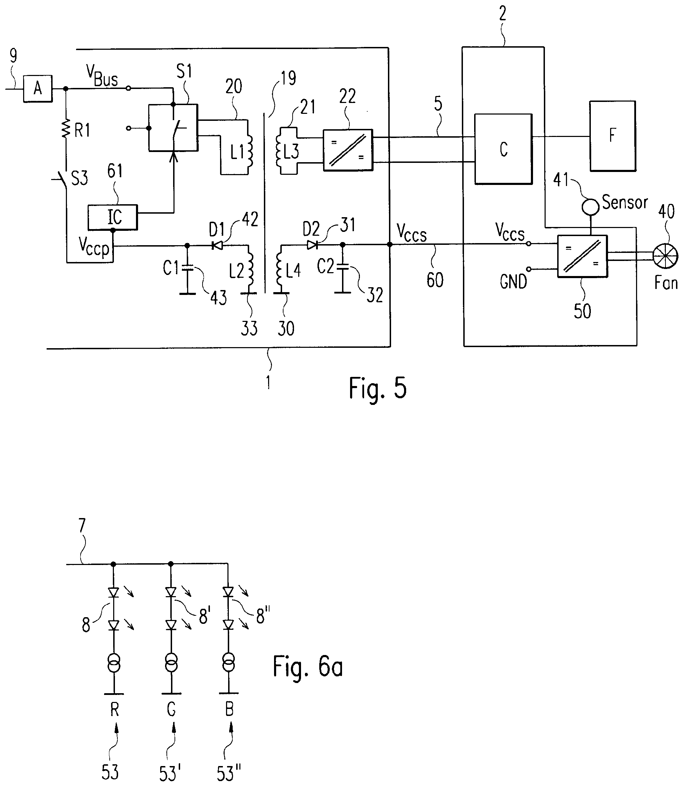

Das weitere Untermodul C kann sowohl als getaktete Konstantstromquelle (also beispielsweise als Tiefsetzsteller auch Buck-Konverter genannt oder isolierter Sperrwandler auch Flyback-Konverter genannt) oder als Linearregler (realisiert mit Transistoren oder integrierten Schaltkreisen) ausgeführt sein. Ein Beispiel für eine Ansteuerung mittels Linearregler ist schematisch in Figur 6a dargestellt.

Weiterhin weist das zweite Modul 2 eine eigene Steuereinheit E auf, die wiederum als Mikrocontroller, ASIC oder Hybrid davon ausgebildet sein kann. Diese Steuereinheit E des zweiten Moduls 2 enthält also Rückführgrößen 13 aus dem Bereich der LED-Strecke 8. Die Steuereinheit E steuert die eine oder mehreren weiteren Untermodule C im zweiten Modul 2 an. Dabei wird der Strom durch die LED-Strecke 8 geregelt, es können zum korrekten Betrieb der LEDs und zur Fehlererkennung aber auch weitere Rückführgrößen erfasst und überwacht werden wie beispielsweise die LED-Spannung oder die Temperatur.

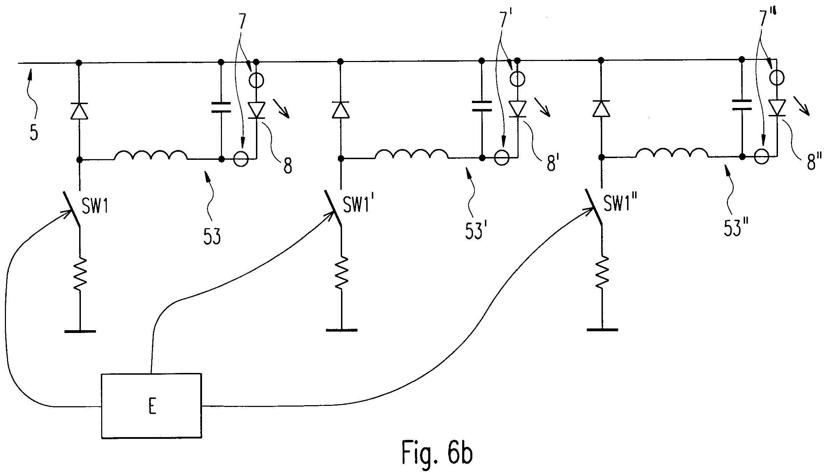

Das weitere Untermodul C ist als getaktete Konstantstromquelle ausgeführt, wobei dieses Untermodul C zumindest einen aktiv getakteten Schalter SW1 als Teil der getakteten Konstantstromquelle aufweist. Ein Beispiel für eine Ansteuerung mittels getakteter Konstantstromquelle ist schematisch in Figur 6b dargestellt. In dieser schematischen Darstellung sind aus Gründen der Übersichtlichkeit keine Erfassungen von Rückführgrößen wie beispielsweise des LED-Stromes, der LED-Spannung oder des Stromes durch den Schalter SW1 dargestellt. Bei diesem Beispiel werden die LEDs der LED-Strecken 8, 8', 8" (die beispielsweise auf einem LED-Modul F angeordnet sind) durch jeweils einen Tiefsetzsteller als getaktete Konstantstromquelle über die Ausgänge 7, 7', 7" gespeist.

Der aktiv getaktete Schalter der getakteten Konstantstromquelle wird dabei direkt oder indirekt (beispielsweise über einen Treiberbaustein) durch die Steuereinheit E angesteuert. Der Einsatz einer getakteten Konstantstromquelle ermöglicht im Unterschied zu einem Linearregler einen flexiblen Betrieb von unterschiedlichen LED-Modulen F. Die getaktete Konstantstromquelle kann sowohl die Spannung als auch den Strom durch das LED-Modul F einstellen und anpassen. Die getaktete Konstantstromquelle stellt einen aktiv getakten DC-DC-Wandler dar, der die DC-Versorgungsspannung 5 aufnimmt und das LED-Modul F entsprechend mit dem gewünschten LED-Strom und / oder LED-Spannung speist, vorzugsweise durch eine Ansteuerung durch die Steuereinheit E aufgrund der dieser Steuereinheit E zugeführten Rückführgrößen.

Die getaktete Konstantstromquelle bietet weiterhin den Vorteil, dass der Betriebsmodus des Untermoduls C an die jeweilige aktuelle Betriebsart angepaßt werden kann. So kann die Art der Taktung der getakteten Konstantstromquelle angepasst werden, beispielsweise kann der Schalter SW1 mit einem frequenzmoduliertem, pulsweitenmodulierten oder einer Kombination von Frequenzmoduliertem und pulsweiten-modulierten Signal angesteuert werden. Die aktuelle Betriebsart kann sich beispielsweise für einen Betrieb bei hoher Helligkeit der LED-Strecke 8 und bei niedriger Helligkeit unterscheiden.

Wie bei dem Beispiel der Fig. 6b dargestellt, ist es möglich, dass mehrere getaktete Konstantstromquellen zur Speisung der LED-Strecken 8, 8', 8" über die Ausgänge 7, 7', 7'' vorhanden sind. Vorzugsweise sind die Schalter SW1, SW1', SW1'' der einzelnen getaktete Konstantstromquellen unabhängig voneinander durch die Steuereinheit E ansteuerbar. Somit wird ermöglicht, dass für jede LED-Strecken 8, 8', 8" jeweils die individuell erforderlichen LED-Ströme und LED-Spannungen über die Ausgänge 7, 7', 7" geliefert werden können. Dabei ist es auch möglich, dass jeweils eine separate Steuereinheit E, E', E" für jede der getakteten Konstantstromquellen mit den Schaltern SW1, SW1', SW1'' vorhanden ist.

Wie bereits erwähnt, kann die Steuereinheit E zum korrekten Betrieb der LEDs und zur Fehlererkennung verschiedene Rückführgrößen erfassen (wie beispielsweise die LED-Spannung, den LED-Strom oder die Temperatur) und vorzugsweise bei Erfassung eines Fehlers die getaktete Konstantstromquelle in einen Fehlerbetriebsmodus umschalten. Dies kann beispielsweise durch einen Wechsel in einen Burst-Modus oder einen Betrieb mit geringer Einschaltzeit des Schalters SW1 erfolgen.

Darüber hinaus kann die Steuereinheit E über eine Kommunikationsschnittstelle 6, die zusätzlich zu der DC-Versorgungsspannung 5 ausgeführt ist, mit der Steuereinheit G des ersten Moduls 1 unidirektional oder bidirektional in Datenkommunikation stehen. Die Kommunikationsschnittstelle 6 kann auch zur Übertragung der Niedervoltversorgung genutzt werden (es erfolgt dann sowohl eine Datenkommunikation als auch eine Energieübertragung). Die Kommunikationsschnittstelle 6 kann auch in die DC-Versorgungsspannung 5 integriert sein, beispielsweise kann die Polarität der DC-Versorgungsspannung 5 umgeschaltet werden oder ein Trägersignal auf die DC-Versorgungsspannung 5 aufmoduliert werden.

Über die Kommunikationsschnittstelle 6 kann die Steuereinheit E auch beispielsweise im Falle einer Fehlererkennung mittels der bidirektionalen Datenkommunikation eine Fehlermeldung und vorzugsweise auch eine Information über die Art des Fehlers an die Steuereinheit G des ersten Moduls 1 übermitteln.

Wie in Figur 1 schematisch dargestellt, ist das zweite Modul 2, hier als Lampenmanagementmodul, vorzugsweise in einem gemeinsamen Gehäuse 12 mit dem eigentlichen LED-Modul F untergebracht.

Wie in Figur 1 schematisch dargestellt, kann das LED-Modul F einen eigenen Speicher 4, beispielsweise in Form eines Eproms aufweisen. Mit dem Bezugszeichen 3 ist schematisch bezeichnet, dass die Steuereinheit E des zweiten Moduls 2 auf diesen Speicher 4 des LED-Moduls F zugreifen kann.

Hinsichtlich des ersten Moduls 1 ist darauf hinzuweisen, dass die PFC-Schaltung nur fakultativ ist.

Darüber hinaus ist darauf hinzuweisen, dass die dargestellten Funktionen der Untermodule A, B und C schaltungstechnisch auch integriert sein können, so dass, solange diese Funktionen grundsätzlich vorliegen, diese sich nicht in einem entsprechenden Aufbau der Schaltungstopologie widerspiegeln müssen.

Der Vorteil des modularen Aufbaus gemäß Fig. 1 ist es, beispielsweise dass das erste Modul 1 bzw. das zweite Modul 2 von unterschiedlichen Herstellern produziert werden können. Darüber hinaus können an ein erstes Modul 1 auch mehrere zweite Module 2 im Sinne eines Master/Slave-Betriebs angeschlossen werden. Bei einem Einsatz von getakteten Konstantstromquellen als Untermodul C wird somit ein zweistufiges System mit modularem Aufbau geschaffen, wobei mehrere zweite Module 2 an ein erstes Modul 1 angeschlossen werden können und auch ein Betrieb unterschiedlicher LED-Module F und / oder ein unterschiedlicher Betrieb gleicher LED-Module F abhängig von der über die Kommunikationsschnittstelle 6 erfolgenden Datenkommunikation wird ermöglicht.

Schließlich erlaubt der modulare Aufbau auch, dass die entsprechenden Untermodule und insbesondere das zweite Modul 2 unter Beibehaltung der übrigen Bestandteile austauschbar sind.

Wenn das zweite Modul 2 in einem gemeinsamen Gehäuse 12 mit dem eigentlichen LED-Modul F untergebracht ist, ergibt sich der Vorteil, dass diese Kombination aus zweitem Modul 2 und LED-Modul F in sich justiert werden kann, sodass beispielsweise deren Abstrahlungscharakteristik, Lichtmenge, Lichtfarbe und/oder Lichtlenkung parametrisiert und somit abgeglichen werden kann. Das erste Modul 1 und auch der Nutzer können somit über ein oder mehrere abgeglichene Systeme verfügen, die bei dann aber gleich ansteuern lassen und auch dementsprechend verhalten. Dieser interne Abgleich der Kombination aus zweitem Modul 2 und LED-Modul F kann beispielsweise über eine der folgenden Methoden erfolgen:
- Abgleich in der Fertigung oder bei der Inbetriebnahme
- ein geschlossenes Regelsystem innerhalb dieser Kombination (beispielsweise mittels eines internen Sensorsystems)
- Stützwerte
- Verfahren mit LED Charakterisierung
- oder eine Kombination aus den genannten Verfahren.

Die Kommunikation zwischen dem ersten Modul 1 und dem zweiten Modul 2 über die Kommunikationsschnittstelle 6 erfolgt dementsprechend vorzugsweise standardisiert.

Von außen beispielsweise über eine Busleitung des externen Busses 10 über die Datenschnittstelle 11 eingehende Befehle oder Abfragen werden wie dargestellt nur dem ersten Modul 1 zugeführt. Dies kann somit als externe Datenkommunikation bezeichnet werden, im Gegensatz zu der internen Datenkommunikation über die Kommunikationsschnittstelle 6 zwischen dem ersten Modul 1 und dem zweiten Modul 2.

Dies hat den Vorteil, dass zur Anpassung an unterschiedliche externe Busse 10 nur das erste Modul 1 anzupassen ist, während der Aufbau und das Datenprotokoll für das zweite Modul 2 davon unberührt bleibt.

Die Kommunikation über die interne KommunikationsSchnittstelle 6 ist somit auch standardisiert, da sie unabhängig von unterschiedlichen an das erste Modul 1 anlegbaren Busprotokollen oder Steuersignalen ist.

Die Kommunikation über die interne Kommunikationsschnittstelle 6 kombiniert mit dem modularen Aufbau des Systems ergibt den Vorteil, dass von dem zweiten Modul 2 die Betriebsdaten für die optimale Speisung des zweiten Moduls 2 übertragen werden können. Das zweite Modul 2 (vorzugsweise von der Steuereinheit E ausgehend) kann die erforderlichen Betriebsdaten über die interne Kommunikationsschnittstelle 6 an das erste Modul 1 übermitteln. Dies bietet den Vorteil, dass ein erstes Modul 1 mit vielen verschiedenen zweiten Modulen 2 kombiniert werden kann, wobei die erforderlichen Betriebsdaten dabei aus dem zweiten Modul 2 ausgelesen werden können.

Beispiele für die Rückführgrößen 13 von der LED-Strecke 8 sind der direkt oder indirekt gemessene LED-Strom und/oder die Spannung über der LED-Strecke 8.

In dem Speicher 4, der dem LED-Modul F zugeordnet ist, können Betriebsdaten für die LEDs der LED-Strecke 8 beispielsweise beim Hersteller abgelegt werden. Diese Daten in diesem Speicher 4 können also beispielsweise Kennwerte sein, die zulässige Maximalwerte für Strom und/oder Spannung, Temperaturabhängigkeit von elektrischen oder optischen (Spektren) Parametern der LEDs, etc. Auch diese Betriebsdaten für die LEDs (beispielsweise Daten aus dem Speicher 4) können über die interne Kommunikationsschnittstelle 6 an das erste Modul 1 übermittelt werden.

Wie bereits oben kurz ausgeführt, kann ein erstes Modul 1 im Sinne eines Masters mehrere zweite Module 2 versorgen. Dies bedeutet, dass ein einziges erstes Modul 1 mehrere zweite Module 2 nicht nur mit einer DC-Versorgungsspannung 5 versorgt, sondern auch mit diesen bidirektional im Sinne einer internen Kommunikationsschnittstelle 6 kommuniziert.

Die Steuereinheit G in dem ersten Modul 1 kann wie oben bereits kurz erläutert das vorzugsweise getaktet ausgeführte zweite Untermodul B ansteuern. Dieselbe Steuereinheit G oder vorzugsweise auch eine weitere (nicht dargestellte) Steuereinheit kann auch den Betrieb des PFCs des ersten Untermoduls A regeln, d. h. beispielsweise den Schalter des PFCs des Untermoduls A ansteuern und für Signale aus dem Bereich des PFCs, wie beispielsweise die Eingangsspannung, den Strom durch eine Induktivität des PFCs, den Strom durch den Schalter des PFCs, die Ausgangsspannung des PFCs, entgegennehmen, wie schematisch durch Pfeile in Fig. 1 dargestellt ist.

Bei dem PFC kann es sich beispielsweise um einen Hochsetzsteller (Boost-Konverter), Sperrwandler (Buck-Boost-Konverter, einen isolierten Sperrwandler (Flyback-Konverter) oder auch SEPIC Konverter handeln.

Typischerweise liegt dabei die Ausgangsspannung (Busspannung) V_{Bus} des PFCs des ersten Untermoduls A in einem Bereich von mehreren hundert Volt DC. Aufgrund des Transformators 19 in dem zweiten Untermodul B kann somit diese DC-Spannung heruntergesetzt werden, beispielsweise auf eine Spannung im Bereich von 20 bis 60 Volt, vorzugsweise 40 bis 50 Volt DC. Somit ist die DC-Versorgungsspannung 5 nach dem Ausgang des ersten Moduls 1 in einem niedrigeren Pegel als die intern in dem ersten Modul 1 herrschenden Spannungen, was für die Anforderungen beispielsweise an die Isolierung der DC-Versorgungsspannung 5 des zweiten Moduls 2 sowie an das zweite Modul 2 selbst niedrigere Ansprüche stellt. Zusätzlich kann optional eine zweite Ausgangsspannung, beispielsweise eine DC-Niedervoltversorgung für das zweite Modul 2, in dem ersten Modul 1 erzeugt werden und dem zweiten Modul 2 bereitgestellt werden.

Ein Vorteil des modularen Aufbaus mit interner Kommunikationsschnittstelle 6 wie oben geschildert ist, dass das zweite Modul 2 (oder bei dem Vorhandensein mehrerer zweiter Module 2 zumindest einzelne dieser) abgeschaltet werden kann, während das erste Modul 1 weiterhin für die Kommunikationsschnittstelle 6 ansprechbar ist oder ggf. auch über die Kommunikationsschnittstelle 6 Meldungen absenden kann. Somit kann das erste Modul 1 eine Notlichterkennung ausführen (Umschalten von AC auf DC-Versorgung oder gleichgerichtete AC-Versorgung). Darüber hinaus kann die Steuereinheit G, beispielsweise als Mikrocontroller, des ersten Moduls 1 in diesem Ruhezustand nur über den externen Bus 10 mit Leistung versorgt werden, wenn der Ruhezustand des externen Bus 10 (wie beispielsweise bei DALI) ungleich 0 Volt ist. Es kann also eine über den externen Bus 10 übertragene Energie zur Versorgung der Steuerschaltung G (insbesondere als Anlaufenergie für die Steuerschaltung G oder eine NiedervoltVersorgungsschaltung) genutzt werden. Somit kann die eigentliche Spannungsversorgung des ersten Moduls 1 in diesem Ruhezustand abgeschaltet werden. Es ist auch möglich, dass über den externen Bus 10 nur ein Aufwecksignal gesendet wird, welches eine Anlaufenergie als Leistung zur kurzzeitigen Versorgung für die Steuerschaltung G oder eine Niedervoltversorgungsschaltung bereitstellt. In diesem Fall kann auch das erste Modul 1 komplett in einen Ruhezustand ohne Energieaufnahme versetzt werden. Das Aufwecksignal kann auch eine Datenübertragung oder ein kurzzeitiges Zuschalten einer Spannung sein.

Wenn mehrere zweite Module 2 durch ein erstes Modul 1 (Zentralmodul) versorgt werden, können natürlich selektiv ausgewählte dieser mehreren zweiten Module 2 abgeschaltet werden. Auch dies führt zu einer Einsparung von elektrischen Verlusten. Beispielsweise im Notlichtfall kann vorgesehen sein, dass zum Erreichen der geringeren Grundhelligkeit für den Notlichtbetrieb nur eines bzw. eine Untergruppe der mehreren von dem ersten Modul 1 versorgten zweiten Module 2 betrieben wird.

Mit dem gemeinsamen Gehäuse 12 ist ein passives oder vorzugsweise aktives, insbesondere von der Steuereinheit E angesteuertes Kühlmittel 40 verbunden, bspw. ein Ventilator oder eine Kühleinheit.

Zusätzlich zu der Kommunikationsschnittstelle 6 kann das zweite Modul 2 (Lampenmanagement-Modul) auch eine zusätzliche Schnittstelle (nicht dargestellt) aufweisen. Diese zusätzliche Schnittstelle kann beispielsweise drahtgebunden oder auch drahtlos ausgelegt sein. Über diese Schnittstelle können beispielsweise Daten von dem zweiten Modul 2 ausgelesen werden, insbesondere zu Wartungszwecken, wie beispielsweise dem Austausch eines zweiten Moduls 2. Es kann aber auch eine Aktualisierung der Daten oder Steuersoftware über diese zusätzliche Schnittstelle erfolgen, insbesondere bei einer drahtlosen Kommunikation. Es kann auch möglich sein, über diese zusätzliche Schnittstelle auch bei fehlender DC-Versorgungsspannung 5 (Leistungsübertragung) für das zweite Modul 2 insbesondere Daten aus diesem zweiten Modul 2 auszulesen. Vorzugsweise ist die zusätzliche Schnittstelle auf dem zweiten Modul 2 räumlich getrennt von der Kommunikationsschnittstelle 6 angeordnet.

### Adaptive Ansteuerung des getakteten DC-DC-Wandlers (zweites Untermodul B) als energieübertragender Konverter

Wie oben bereits erläutert, weist das erste Modul 1 ein zweites Untermodul B auf, das die Funktion eines isolierenden Wandlers aufweist. Dieses zweite Untermodul B wird ausgehend beispielsweise von dem PFC des ersten Untermoduls A mit einer DC-Spannung (Busspannung) V_{Bus} versorgt.

Dieses zweiten Untermodul B weist wie im Folgenden im Detail erläutert einen erfindungsgemäßen getakteten isolierenden DC/DC-Wandler auf. Dieser soll nunmehr unter Bezugnahme auf Figur 2 erläutert werden.

In Figur 2 ist gezeigt, dass die Ausgangsspannung des Moduls A (bspw. PFCs), nämlich die Busspannung V_{Bus} einem Wechselrichter 14 zugeführt ist, der als Halbbrücken-Wechselrichter mit zwei Schaltern S1, S2 ausgebildet ist.

Die Ansteuersignale für die Taktung der Schalter S1, S2 kann von der Steuereinheit G des ersten Moduls 1 erzeugt werden.

An den Mittenpunkt 29 des Wechselrichters 14 schließt sich im dargestellten Beispiel ein Resonanzkreis 15, hier als Serienresonanzkreis ausgebildet, nämlich ein LLC-Resonanzkreis, an. Im dargestellten Beispiel weist dieser Resonanzkreis 15 eine erste Induktivität 16, einen Koppelkondensator 17, einen Transformator 19 auf. An den Resonanzkreis 15 schließt sich ein Transformator 19 an mit einer Primärwicklung 20 und einer Sekundärwicklung 21. Die Induktivität 16 kann in den Transformator 19 integriert sein, wie später noch erläutert wird.

Hinsichtlich des dargestellten Beispiels ist anzumerken, dass der Transformator 19 als Ersatzschaltbild dargestellt ist. Die Primärwicklung 20 weist dabei in der Realität eine Induktivität 18 als integrierte Streuinduktivität auf und daneben eine Hauptinduktivität Lm, die den Magnetisierungsstrom führt.

Auf den Transformator 19 folgt ein Gleichrichter 22, an dessen Ausgang dann die heruntergesetzte DC-Versorgungsspannung 5 für das Lampenmanagementmodul 2 bereitgestellt wird. Der Transformator 19 sorgt also für die notwendige galvanische Entkopplung (Isolierung bzgl. der dem ersten Modul 1 zugeführten Eingangsspannung 9). Der Gleichrichter 22 kann wie an sich bekannt mit zwei oder vier Dioden ausgeführt werden, es kann indessen auch ein sogenannter 'synchronous rectifyer' (Synchrongleichrichter) vorgesehen sein, der zwei MOSFETs aufweist. Dieser Synchrongleichrichter führt wie an sich bekannt mit den beiden MOSFETs eine Vollbrückengleichrichtung aus. Der Gleichrichter 22 kann also sowohl als aktiver Gleichrichter (mit aktiv geschalteten Elementen wie beispielsweise MOSFET) oder als passiver Gleichrichter (mit passiv geschalteten Elementen wie Dioden) ausgeführt sein. Es kann eine Vollweggleichrichtung oder auch nur eine Einweggleichrichtung erfolgen. Auf den Gleichrichter folgt wie dargestellt ein Speicherkondensator 23. Es können am Ausgang auch weitere Filterelemente wie beispielsweise eine oder mehrere Induktivitäten und / oder auch zusätzliche Kondensatoren zur Glättung und Stabilisierung der Ausgangsspannung (DC Versorgungsspannung 5) vorhanden sein.

Hinsichtlich des als LLC-Resonanzkreis im dargestellten Beispiel ausgeführten Resonanzkreis 15 ist zu bemerken, dass die Induktivität 16 nicht als eigenes Bauteil vorliegen muss. Vielmehr kann die Streuung der Primärwicklung 20 eines realen Transformators diese Funktion übernehmen. Wenn somit die erste Induktivität 16 durch die Streuung der Primärwicklung 20 des Transformators 19 gebildet werden soll, wird gezielt darauf geachtet, dass keine perfekte Kopplung zwischen Primärwicklung 20 und Sekundärwicklung 21 des Transformators 19 vorliegt. Beispielsweise durch eine entsprechende Beabstandung der Primärwicklung 20 und der Sekundärwicklung 21 des Transformators 19 kann gezielt der notwendige Streueffekt erreicht werden, der funktionell die erste Induktivität 16 erzielen lässt. Indessen diese Streuwirkung nicht ausreichend sein sollte, wird eine tatsächlich auch als separates Bauteil vorliegende Induktivität 16 vorgesehen sein.

Die Kombination des Wechselrichters 14 mit dem Resonanzkreis 15 und dem folgenden Gleichrichter 22 bildet also einen durch den Transformator 19 isolierenden DC/DC-Wandler als Energie übertragenden Konverter. Dabei wird dieser DC/DC-Wandler durch eine stabilisierte Gleichspannung, der Busspannung V_{Bus}, gespeist und daraus wird am Ausgang des DC/DC-Wandlers eine DC-Versorgungsspannung 5 erzeugt, welche auch eine stabilisierte Gleichspannung darstellt, wobei diese gegenüber der Busspannung V_{Bus} durch den Transformator 19 isoliert ist und vorzugsweise ein anderes Potential aufweist.

Dieses Prinzip findet indessen genauso auch Anwendung auf andere Resonanzschaltungen, die beispielsweise Parallelresonanzschaltungen oder Kombinationen von Serien- und Parallelresonanzschaltungen.

Ein Vorteil der Verwendung einer Resonanzschaltung in einem derartigen Energie übertragenden DC/DC-Wandler liegt in der Ausnutzung einer Resonanzüberhöhung, um bei Nominallast oder hoher Belastung sekundärseitig ein möglichst verlustarmes Schalten der Schalter S1, S2 des Wechselrichters 14 zu ermöglichen. Dazu wird üblicherweise in der Nähe der Resonanzfrequenz des Resonanzkreises oder in der Nähe einer Harmonischen einer Resonanz des Ausgangskreises gearbeitet.

Die Ausgangsspannung (an dem Speicherkondensator 23) des übertragenden Konverters ist somit eine Funktion der Frequenz der Ansteuerung der Schalter S1, S2 des Wechselrichters 14, hier beispielhaft als Halbbrücken-Wechselrichter ausgeführt.

Wenn indessen an dem Ausgang der in Figur 2 dargestellten Schaltung eine geringe Last vorliegt (also das Modul 2 und die LED-Module F in Figur 1 eine geringe elektrische Last darstellen) wird die Ansteuerfrequenz der Schalter S1, S2 des Wechselrichters 14 weg von der Resonanzfrequenz erhöht. Mit der Veränderung der Ansteuerfrequenz ändert sich indessen nunmehr auch der Phasenwinkel zwischen der Spannung und dem AC-Strom an dem Mittenpunkt 29 des Wechselrichters 14.

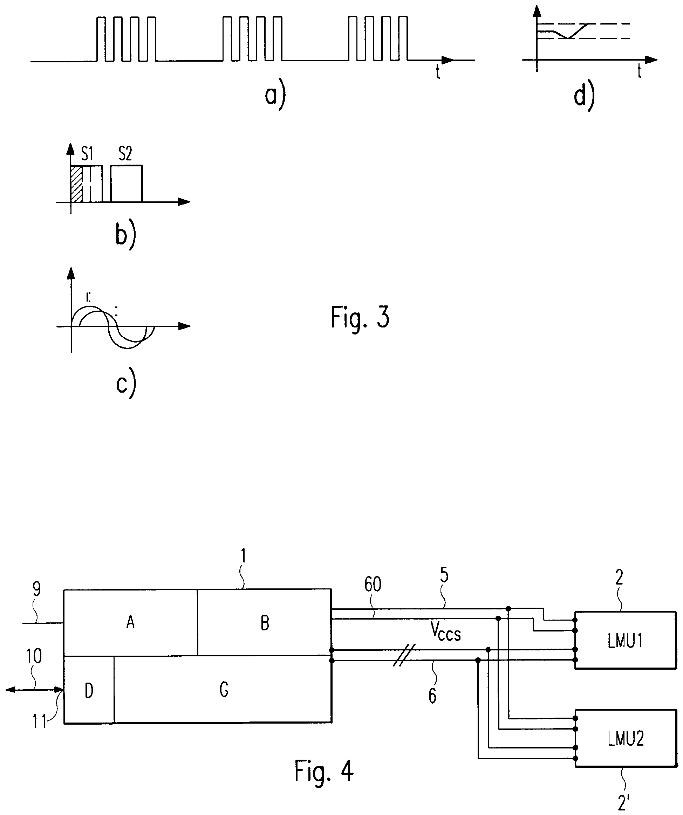

Bei sehr hoher Last (beispielsweise großer Strom durch die LEDs) und somit einem Betrieb nahe der Resonanz ist der Phasenwinkel zwischen Strom und Spannung am Mittenpunkt 29 sehr gering. Wie gesagt, bei geringer Last und somit einem Betrieb weiter entfernt von der Resonanz, wenn also beispielsweise eine geringe Leistung durch die LED-Strecke 8 fließt und somit keine oder nur eine geringe Leistung auf der Sekundärseite des Transformators 19 abgenommen wird, wird der Phasenwinkel sehr groß (siehe Figur 3c) und kann beispielsweise bis zu 50° betragen. In diesem Zustand fließen also weiterhin Ströme durch den Wechselrichter 14, die zu elektrischen Verlusten führen, ohne dass eine nennenswerte Leistung in die LED-Strecke 8 fließt.

Eine nicht erfindungsgemäße kombinierte Regelung kann vorgesehen sein. Die kombinierte Regelung besteht darin, dass für die zu regelnde Größe 'Ausgangsspannung des Energie übertragenden isolierten Konverters' zwei Steuergrößen verwendet werden, nämlich neben der Taktung des wenigstens einen Schalters S1, S2 des Wechselrichters 14 die Veränderung der Busspannung V_{Bus} des Wechselrichters 14. Die Veränderung der Busspannung V_{Bus} kann beispielsweise durch entsprechende Ansteuerung des PFCs des ersten Untermoduls A erreicht werden.

Zusätzlich oder alternativ kann, ebenfalls nicht erfindungsgemäß, nicht nur die Busspannung V_{Bus} durch entsprechende Ansteuerung des PFCs des ersten Untermoduls A angepasst werden. Abhängig vom Lastzustand oder auch Betriebszustand kann der PFC des ersten Untermoduls A entweder selbstständig oder durch eine entsprechende Ansteuerung, insbesondere durch die Steuereinheit G, den Betriebsmodus wechseln. Insbesondere kann der PFC des ersten Untermoduls A bei einem Betrieb mit hoher Last entweder im sogenannten Grenzbetrieb zwischen lückendem und nichtlückendem Strombetrieb (,Borderline Mode') oder im nichtlückendem Strombetrieb (,continuous conduction mode') arbeiten, und bei Betrieb einer geringen Last oder im Stand-By Modus im lückendem Strombetrieb (,discontinuous conduction mode') arbeiten. Es wäre aber auch beispielsweise ebenfalls nicht erfindungsgemäß möglich, dass der PFC des ersten Untermoduls A bei Betrieb einer geringen Last oder im Stand-By Modus in sogenannten Burst Modus (also eines Puls-Pause-Betriebsmodus oder auch Impulsmodus genannt), wechselt. Dabei wird weiterhin die Versorgungsspannung (Busspannung V_{Bus}) gleichgehalten, aber nach einer Anzahl von Ansteuerimpulsen für den oder die Schalter des PFC eine längere Pause eingelegt, bevor der nächste "Burst" (Impuls) als Ansteuersignal für die Schalter des PFC angelegt wird. Die Pause zwischen den Impulszügen ist dabei wesentlich länger, also beispielsweise mindestens das Doppelte einer Addition der Einschaltzeitdauern der Schalter des PFC.

Es liegt also ein kombiniertes Regelkonzept vor, bei dem abhängig von der Lastaufnahme von einem Rückführsignal, das diese Lastaufnahme direkt oder indirekt wiedergibt, die genannten Steuergrößen kombiniert werden.

Eine weitere nicht erfindungsgemäße Möglichkeit ist es, in der Steuergröße "Frequenz der Schalter" bei gleichbleibender Frequenz die Totzeit (siehe Figur 3b) zwischen den Einschaltzeitdauern der Schalter S1, S2 des Wechselrichters 14 zu verlängern. Es kann also beispielsweise die Frequenzverringerung der Leistungsbereitstellung zu einer maximal zulässigen Ansteuerfrequenz der Schalter S1, S2 des Wechselrichters 14 erhöht werden. Bei dieser maximal zulässigen Frequenz (entsprechend dem maximal zulässigen Phasenwinkel) wird dann die zweite Steuergröße zur weiteren Verringerung der Leistungsaufnahme verwendet, nämlich die Verlängerung der Totzeit zwischen den Einschaltzeitdauern der Schalter S1, S2.

Eine erfindungsgemäße Möglichkeit ist es, bei gleichbleibender Frequenz das Verhältnis von Einschaltzeitdauer zu Ausschaltzeitdauer der Schalter S1, S2 des Wechselrichters 14 zu verändern (also das Einschaltverhältnis). Vorzugsweise wird das Einschaltverhältnis mit Abnahme der Last verringert. Es kann also beispielsweise die Frequenzerhöhung der Leistungsbereitstellung zu einer maximal zulässigen Ansteuerfrequenz der Schalter S1, S2 des Wechselrichters 14 erhöht werden. Bei dieser maximal zulässigen Frequenz (entsprechend dem maximal zulässigen Phasenwinkel) wird dann die zweite Steuergröße zur weiteren Verringerung der Leistungsaufnahme verwendet, nämlich die Veränderung der Einschaltzeitdauer der Schalter S1, S2 (bei gleichbleibender Frequenz).

Eine nicht erfindungsgemäße Möglichkeit, eine weitere Steuergröße einzuführen, ist die Einführung eines sogenannten Burst Modes (also eines Puls-Pause-Betriebsmodus oder auch Impulsmodus genannt), siehe Figur 3a. Dabei wird weiterhin die Versorgungsspannung (Busspannung V_{Bus}) gleichgehalten, aber zumindest dann, wenn die Ansteuerfrequenz einen maximal zulässigen Wert erhalten wird, zur Verringerung der Lastbereitstellung die Frequenz nicht mehr weiter erhöht. Vielmehr werden nach einer Anzahl von Ansteuerimpulsen für beide Schalter S1, S2 (die Anzahl ist dabei größer als 1) eine längere Pause eingelegt, bevor der nächste "Burst" (Impuls) als Ansteuersignal für die Schalter S1, S2 angelegt wird. Die Pause zwischen den Impulszügen ist dabei wesentlich länger, also beispielsweise mindestens das Doppelte einer Addition der Einschaltzeitdauern der Schalter S1, S2.

Bei diesem nicht erfindungsgemäßen Burst-Modus, bei dem die Steuergröße also die Länge der aus Totzeit zwischen zwei Impulszügen ist, wird es natürlich zu einem gewissen "Rippel" der Spannung an der Ausgangsseite, also am Speicherkondensator 23 kommen, wie in Figur 3d dargestellt. Erfindungsgemäß kann nunmehr vorgesehen sein, dass ein zulässiger Rippel-Korridor um einen Sollwert für die Spannung an dem Speicherkondensator 23 vorgegeben ist. Wenn die Spannung nach einer gewissen Anzahl an Impulsen eines Impulszuges (Bursts) den oberen Grenzwert des Rippel-Korridors erreicht hat, wird eine längere Impulspause eingelegt. In dieser Impulspause des Burst-Betriebsmodus sinkt die Spannung am Speicherkondensator 23 dann ab, bis sie den unteren Grenzwert des vorgegebenen Rippel-Korridors erreicht. Beim Erreichen des unteren Grenzwerts wird der nächste Impulszug angelegt, so dass sich dieses Ansteigen und Abfallen der Spannung (Rippel) am Speicherkondensator 23 zyklisch wiederholen wird. Es liegt also eine hysteretische Regelung vor. Die Burst Pakete (also der Zeitraum, in dem kurzzeitig getaktet wird) können dabei relativ kurz gehalten werden. Auf diese Weise kann Störungen und auch hörbaren Geräuschen entgegengewirkt werden. Alternativ können die Bursts auch mit einer veränderlichen Wiederholrate und / oder Dauer der Pakete erzeugt werden. Wenn das Untermodul C als getaktete Konstantstromquelle ausgeführt ist, dann kann der in dem Burst-Betriebsmodus auftretende Rippel der DC-Versorgungsspannung 5 durch eine entsprechende Ansteuerung der getaktete Konstantstromquelle kompensiert werden. Dies kann beispielsweise mittels eine Regelschleife für eine Ausregelung des LED-Stromes oder einen Betrieb der getakteten Konstantstromquelle in Abhängigkeit von der Amplitude der DC-Versorgungsspannung 5 erfolgen.

Wie bereits erwähnt erfolgt die adaptive Einstellung des Betriebsmodus (Steuergröße) des DC-DC-Wandlers abhängig von der Last auf der Sekundärseite, d.h. der Last, die durch die Spannung an dem Speicherkondensator 23 versorgt ist. Dazu kann ein die Last wiedergebendes Signal an die Ansteuerschaltung (IC in der Steuerschaltung G in Fig. 1) zurückgeführt werden, oder ein extern zugeführtes Dimmsignal verwendet werden. Die Leistungsaufnahme der Last kann dabei sekundärseitig (bezüglich des Transformators 19), aber auch auf der Primärseite des Transformators 19 gemessen werden. Beispielsweise kann als ein die Leistungsaufnahme der Last wiedergebendes Signal der Spannungsabfall über einen Messwiderstand 24 in Serie zu den Schaltern S1, S2 oder zumindest in Serie zu einem der Schalter S1, S2 des Wechselrichters 14 verwendet werden. Die eigentliche Leistungsaufnahme stellt dann im Wesentlichen ein Produkt der (gemessenen oder zumindest durch den PFC konstant gehaltenen) Versorgungsspannung (Busspannung V_{Bus}) mit diesem über den Spannungsabfall am Messwiderstand 24 gemessenen Strom durch den Wechselrichter 14 dar.

In dem obigen Beispiel wurde eine primärseitige Erfassung für ein die Leistungsaufnahme der Last wiedergebendes Signal gegeben. Natürlich können indessen auch sekundärseitige Rückführsignale, beispielsweise der Strom durch die und/oder die Spannung über der LED-Strecke 8, etc. als Rückführsignal verwendet werden, welches Rückführsignal die Leistungsaufnahme der Last wiedergibt.

Ein bevorzugter Ablauf der adaptiven kombinierten Regelung ist es dabei, die Verringerung für die Last dadurch durchzuführen, dass kontinuierlich die Ansteuerfrequenz der Schalter S1, S2 des Wechselrichters 14 erhöht wird, bis einen fest vorgegebene Maximalfrequenz erreicht wird. Wenn diese Maximalfrequenz erreicht ist, aber die zugeführte Leistung für die Last weiterverringert werden soll, wird dann adaptiv die Ansteuerschaltung einer der oben angeführten weiteren Betriebsarten wählen. Wenn beispielsweise bei Erreichen der zulässigen Maximalfrequenz die Busspannung V_{Bus} abgesenkt wird, kann dann die zulässige Maximalfrequenz der Ansteuerung der Schalter S1, S2 beibehalten werden, oder auch wenn dies durch Absenken der Busspannung V_{Bus} oder der anderen gewählten Steuergröße überkompensiert werden kann, die Ansteuerfrequenz sogar wieder auf einen niedrigeren Sollwertbereich abgesenkt werden.

Es folgt also ein Umschalten der Steuergröße für die Leistungszufuhr für die Sekundärseite beim Erreichen der Maximalfrequenz. Beispiele für eine weitere Steuergröße die dann ergänzend oder alternativ zu der Veränderung der Ansteuerfrequenz verwendet wird, wurde bereits die Veränderung (Absenkung) der Versorgungsspannung (Busspannung V_{Bus}), die Veränderung der Totzeit zwischen den Einschaltdauern der beiden Schalter S1, S2 oder die Verlängerung der Totzeit zwischen zwei Impulszügen im Burst-Modus genannt. Dabei kann auch eine Kombination von weiteren Steuergrößen genutzt werden, beispielsweise können sowohl das Einschaltverhältnis als auch die Totzeit geändert werden. Erfindungsgemäß ist hier nur die ergänzende Veränderung des Einschaltverhältnisses.

Es liegt somit grundsätzlich eine alternative Ansteuerung eines getakteten DC-DC Wandlers als Untermodul B vor, wobei sich die Adaptivität auf die Adaption der Steuergrößen abhängig von der Lastaufnahme der Sekundärseite des DC-DC-Wandlers bezieht. Das Untermodul B kann auch durch einen Wechselrichter mit einem Schalter gebildet werden, beispielsweise als Class-E Konverter oder quasi-resonanter Flyback-Konverter, wobei jeweils eine Gleichrichtung und Glättung am Ausgang erfolgt.

Wie in Fig. 1 und 2 bereits dargestellt kann an dem Speicherkondensator 23 ein zweites Modul 2 mit einer weiteren Konverterstufe (weiteres Untermodul C als Konstantstromquelle) angeschlossen sein, wobei das zweite Modul 2 (Lampenmanagementmodul) eine Steuereinheit E, z.B. als integrierte Schaltung, aufweisen kann. Das weitere Untermodul C kann sowohl als getaktete Konstantstromquelle (also beispielsweise als Tiefsetzsteller, d.h. Buck-Konverter) oder als Linearregler (realisiert mit Transistoren oder integrierten Schaltkreisen) ausgeführt sein. Es können aber auch direkt LEDs an den Ausgang des zweiten Untermoduls B angeschlossen werden.

Externe Dimmbefehle können, wie in Fig. 1 dargestellt, der Steuereinheit G des ersten Moduls 1, aber auch der Steuereinheit E des zweiten Moduls 2 zugeführt werden. Im zweiten Fall kann die Steuereinheit E des zweiten Moduls 2 die Dimminformation an die Steuereinheit G des ersten Moduls 1 übertragen, so dass für die Leistungsaufnahme kein Messsignal vorliegen muss, sondern vielmehr aus einer der Steuereinheit G für den DC-DC-Wandler im zweiten Modul B vorliegende Dimminformation verwendet werden kann.

Die adaptive Einstellung des zweiten Untermoduls B kann aber auch aufgrund eines von extern zugeführten Dimmbefehls oder auch aufgrund einer Rückmeldung durch das zweite Modul 2 erfolgen.

Die Ansteuerung der Schalter S1, S2 des Wechselrichter 14 kann über die Steuereinheit G über eine Treiberstufe erfolgen. Vorzugsweise ist zumindest die Treiberstufe für die auf hohem Potential liegenden Schalter des Wechselrichters für eine Ansteuerung auf hohem Spannungspotential ausgelegt. Beispielsweise handelt es sich bei dieser Treiberstufe um eine Pegelversatzstufe, eine Treiberstufe mit Transformator oder eine Treiberstufe mit Luftspule. Diese Treiberstufe kann auch in die Steuereinheit G integriert sein.

Die Steuereinheit G kann weiterhin Mittel zur Vermeidung von Fehlern beim Betrieb des Wechselrichters aufweisen. So können beispielsweise Überstromabschaltungen oder Strombegrenzungen für den Strom durch zumindest einen Schalter vorhanden sein. Es kann auch die Totzeit für die Ansteuerung des Wechselrichters einstellbar sein (d.h. die Zeitspanne zwischen dem Öffnen des einen Schalters (bspw. S1) und dem Schließen des zweiten Schalter (S2)). Vorzugsweise ist diese Totzeit auch adaptiv einstellbar, beispielsweise abhängig von der Mittelpunktspannung am Wechselrichter 14 oder vom Strom oder der Spannung über einem Schalter des Wechselrichters 14.

Die Steuereinheit G kann auch die Busspannung V_{Bus} überwachen, insbesondere auch den Rippel der Busspannung V_{Bus} (d.h. die Schwankungen innerhalb einer bestimmten Zeit). Abhängig von der Auswertung des Rippels der Busspannung V_{Bus} kann die Steuereinheit G die Ansteuerung des Wechselrichters 14 beeinflussen. Insbesondere kann sie die Frequenz des Wechselrichters 14 an die Auswertung des Rippels der Busspannung V_{Bus} anpassen, um den Rippel am Ausgang des Wechselrichter 14 zu reduzieren. Vorzugsweise wird dabei die Frequenz des Wechselrichters bei steigender Busspannung V_{Bus} erhöht, und bei sinkender Busspannung V_{Bus} abgesenkt. Auf diese Weise kann erreicht werden, dass dieser Rippel auf der Busspannung V_{Bus} weniger stark an den Ausgang des Wechselrichters 14 weitergeführt wird.

### Liste der Bezugszeichen

- 1:: erstes Modul
- 2, 2':: zweites Modul
- 3:: Zugriff von E auf 4
- 4:: Speicher
- 5:: DC-Versorgungsspannung
- 6:: Kommunikationsschnittstelle
- 7:: Ausgang
- 8, 8', 8":: LED-Strecke
- 9:: Eingangsspannung
- 10:: externer Bus
- 11:: Datenschnittstelle
- 12:: Gehäuse
- 13:: Rückführgröße von 8
- 14:: Wechselrichter
- 15:: Resonanzkreis
- 16:: Induktivität
- 17:: Koppelkondensator
- 18:: Induktivität
- 19:: Transformator
- 20:: Primärwicklung
- 21:: Sekundärwicklung
- 22:: Gleichrichter
- 23:: Speicherkondensator
- 24:: Messwiderstand
- 29:: Mittenpunkt
- 30:: Sekundärwicklung
- 31:: Diode
- 32:: Kondensator
- 33:: Sekundärwicklung
- 40:: Kühlmittel
- 41:: Aktoren oder Sensoren
- 42:: Diode
- 43:: Kondensator
- 50:: Kühlmittelansteuerung
- 51:: Speicher
- 52:: Speicher, der mit der Steuereinheit G verbunden ist
- 53, 53', 53":: LED-Kanal

- A:: erstes Untermodul
- B:: zweites Untermodul
- C:: weiteres Untermodul
- D:: Schnittstelleschaltung
- E:: Steuereinheit
- F:: LED-Modul
- G:: Steuereinheit

- Lm:: Hauptinduktivität
- R1:: Anlaufwiderstand
- S1:: Schalter
- S2:: Schalter
- S3:: Schalter
- V_{Bus}:: Busspannung
- V_{CCP}:: primärseitige Niedervoltspannungsversorgung
- V_{CCs}:: sekundärseitige DC-Niedervoltspannungsversorgung

## Patentansprüche

1. LED-Betriebsschaltung mit einem isolierenden energieübertragenden DC/DC-Wandler,
wobei der Wandler aufweist:
- einen von einer Gleichspannung versorgten Wechselrichter (14) mit zwei Schaltern (S1, S2), der als Halbbrücke oder Vollbrücke ausgebildet ist,
- einen von dem Wechselrichter (14) gespeisten Resonanzkreis (15),
- einen an den Resonanzkreis (15) angeschlossenen Transformator (19),
- einen Gleichrichter (22), und
- eine Steuereinheit (G), die die zwei Schalter (S1, S2) ansteuert und dazu ausgebildet ist, zur Anpassung der Leistungsbereitstellung für die Sekundärseite des Wandlers als ersten Steuermodus die Ansteuerfrequenz der Schalter (S1, S2) bzgl. der Resonanzfrequenz des Resonanzkreises (15) zu verändern,
wobei die Steuereinheit (G) dazu ausgebildet ist, lastabhängig wenigstens einen weiteren, die Leistungsbereitstellung beeinflussenden Steuermodus des DC/DC-Wandlers zu betreiben,
**dadurch gekennzeichnet,**
**dass** die Steuereinheit (G) dazu ausgebildet ist, eine Verringerung der Leistungsbereitstellung durch Erhöhen der Ansteuerfrequenz weg von der Resonanzfrequenz zu veranlassen, bis eine vorgegebene Maximalfrequenz erreicht ist, und dann eine weitere Verringerung der Leistungsbereitstellung zu erreichen durch:
- Veränderung des Verhältnisses von Einschaltzeitdauer zu Ausschaltzeitdauer der Schalter (S1, S2) bei gleichbleibender Ansteuerfrequenz.

2. LED-Betriebsschaltung nach einem der vorhergehenden Ansprüche,
wobei der Steuereinheit (G) ein die Lastaufnahme an der Sekundärseite des DC/DC-Wandlers vorgebendes Signal und/oder ein die Lastaufnahme an der Sekundärseite des DC/DC-Wandlers wiedergebendes Signal zugeführt ist.

3. Verfahren zum Betrieb einer LED-Betriebsschaltung mit einem isolierenden energieübertragenden DC/DC-Wandler, wobei der Wandler aufweist:
- einen von einer Gleichspannung versorgten Wechselrichter (14) mit zwei Schaltern (S1, S2), der als Halbbrücke oder Vollbrücke ausgebildet ist,
- einen von dem Wechselrichter (14) gespeisten Resonanzkreis (15),
- einen an den Resonanzkreis (15) angeschlossenen Transformator (19),
- einen Gleichrichter (22), und
- eine Steuereinheit (G), die die zwei Schalter (S1, S2) ansteuert und zur Anpassung der Leistungsbereitstellung für die Sekundärseite des Wandlers als ersten Steuermodus die Ansteuerfrequenz der Schalter (S1, S2) bzgl. der Resonanzfrequenz des Resonanzkreises (15) zu verändert,
wobei die Steuereinheit (G) lastabhängig wenigstens einen weiteren, die Leistungsbereitstellung beeinflussenden Steuermodus des DC/DC-Wandlers zu betreibt,
**dadurch gekennzeichnet, dass**
die Steuereinheit (G) die Leistungsbereitstellung durch Erhöhen der Ansteuerfrequenz weg von der Resonanzfrequenz verringert, bis eine vorgegebene Maximalfrequenz erreicht ist, und dann eine weitere Verringerung der Leistungsbereitstellung zu erreichen durch:
- Veränderung des Verhältnisses von Einschaltzeitdauer zu Ausschaltzeitdauer der Schalter (S1, S2) bei gleichbleibender Ansteuerfrequenz.

4. Verfahren nach Anspruch 3,
wobei der Steuereinheit (G) ein die Lastaufnahme an der Sekundärseite des DC/DC-Wandlers vorgebendes Signal und/oder ein die Lastaufnahme an der Sekundärseite des DC/DC-Wandlers wiedergebendes Signal zugeführt wird.

5. Integrierte Steuerschaltung, insbesondere ASIC oder Mikrokontroller, die zur Durchführung eines Verfahrens nach einem der Ansprüche 3 oder 4 ausgebildet ist.

## Claims

1. LED operating circuit comprising an insulating power transmitting DC/DC converter, wherein the converter comprises:
- a DC-powered inverter (14) having two switches (S1, S2) formed as a half bridge or full bridge,
- a resonance circuit (15) fed by the inverter (14),
- a transformer (19) connected to the resonance circuit (15),
- a rectifier (22), and
- a control unit (G) controlling the two switches (S1, S2) and designed to adapt the power supply for the secondary side of the converter as a first control mode, in order to change the control frequency of the switch (S1, S2) with respect to the resonance frequency of the resonance circuit (15),
wherein the control unit (G) is designed to operate at least one further control mode of the DC/DC converter to influence the power supply as a function of the load,
**characterized in that**
the control unit (G) is designed to cause a reduction in the power supply by increasing the control frequency away from the resonance frequency until a predetermined maximum frequency is reached, and then to achieve a further reduction of the power supply by:
- a change in the ratio of on-time to off-time of the switch (S1, S2) at the same control frequency.

2. LED operating circuit according to one of the preceding claims, wherein the control unit (G) supplies a predetermined signal to the load consumption on the secondary side of the DC/DC converter and/or a reproduced signal to the load consumption on the secondary side of the DC/DC converter.

3. Method of operating an LED driving circuit with an insulating power transmitting DC/DC converter, wherein the converter comprises:
- a DC-powered inverter (14) having two switches (S1, S2) formed as a half bridge or full bridge,
- a resonance circuit (15) fed by the inverter (14),
- a transformer (19) connected to the resonance circuit (15),
- a rectifier (22), and
- a control unit (G) controlling the two switches (S1, S2) and designed to adapt the power supply for the secondary side of the converter as a first control mode, in order to change the control frequency of the switch (S1, S2) with respect to the resonance frequency of the resonance circuit (15),
wherein the control unit (G) is designed to operate at least one further control mode of the DC/DC converter to influence the power supply as a function of the load,,
**characterized in that**
the control unit (G) is designed to cause a reduction in the power supply by increasing the control frequency away from the resonance frequency until a predetermined maximum frequency is reached, and then to achieve a further reduction of the power supply by:
- a change in the ratio of on-time to off-time of the switch (S1, S2) at the same control frequency.

4. Method according to claim 3, wherein the control unit (G) supplies a predetermined signal to the load consumption on the secondary side of the DC/DC converter and/or a reproduced signal to the load consumption on the secondary side of the DC/DC converter.

5. Integrated control circuit, in particular an ASIC or microcontroller circuit, which is designed to implement a method according to one of claims 3 or 4.

## Revendications

1. Circuit de commande de LED avec un convertisseur DC/DC isolant transmetteur d'énergie,
le convertisseur comprenant :
- un onduleur (14) alimenté par une tension continue, avec deux commutateurs (S1, S2), qui est conçu comme un demi-pont ou un pont complet,
- un circuit de résonance (15) alimenté par l'onduleur (14),
- un transformateur (19) raccordé au circuit de résonance (15),
- un redresseur (22) et
- une unité de commande (G) qui contrôle les deux commutateurs (S1, S2) et qui est conçue, afin d'adapter la mise à disposition de puissance pour le côté secondaire du convertisseur en tant que premier mode de commande, pour modifier la fréquence de commande des commutateurs (S1, S2) par rapport à la fréquence de résonance du circuit de résonance (15),
l'unité de commande (G) étant conçue pour commander, en fonction de la charge, au moins un autre mode de commande, influençant la mise à disposition de puissance, du convertisseur DC/DC,
**caractérisé en ce que**
l'unité de commande (G) est conçue pour permettre une réduction de la mise à disposition de puissance en augmentant la fréquence de commande loin de la fréquence de résonance, jusqu'à ce qu'une fréquence maximale prédéterminée soit atteinte, puis pour atteindre une réduction supplémentaire de la mise à disposition de puissance en :
- modifiant le rapport entre la durée d'activation et la durée de désactivation des commutateurs (S1, S2) à fréquence de commande constante.

2. Circuit de commande de LED selon l'une des revendications précédentes,
un signal déterminant la charge au niveau du côté secondaire du convertisseur DC/DC et/ou signal reproduisant la charge au niveau du côté secondaire du convertisseur DC/DC étant introduits dans l'unité de commande (G).

3. Procédé de commande d'un circuit de commande de LED avec un convertisseur DC/DC isolant transmetteur d'énergie, le convertisseur comprenant :
- un onduleur (14) alimenté par une tension continue, avec deux commutateurs (S1, S2), qui est conçu comme un demi-pont ou un pont complet,
- un circuit de résonance (15) alimenté par l'onduleur (14),
- un transformateur (19) raccordé au circuit de résonance (15),
- un redresseur (22) et
- une unité de commande (G) qui contrôle les deux commutateurs (S1, S2) et qui est conçue, afin d'adapter la mise à disposition de puissance pour le côté secondaire du convertisseur en tant que premier mode de commande, pour modifier la fréquence de commande des commutateurs (S1, S2) par rapport à la fréquence de résonance du circuit de résonance (15),
l'unité de commande (G) étant conçue pour commander, en fonction de la charge, au moins un autre mode de commande, influençant la mise à disposition de puissance, du convertisseur DC/DC,
**caractérisé en ce que**
l'unité de commande (G) réduisant la mise à disposition de puissance en augmentant la fréquence de commande loin de la fréquence de résonance jusqu'à ce qu'une fréquence maximale prédéterminée soit atteinte, puis pour atteindre une réduction supplémentaire de la mise à disposition de puissance en :
- modifiant le rapport entre la durée d'activation et la durée de désactivation des commutateurs (S1, S2) à fréquence de commande constante.

4. Procédé selon la revendication 3,
un signal déterminant la charge au niveau du côté secondaire du convertisseur DC/DC et/ou signal reproduisant la charge au niveau du côté secondaire du convertisseur DC/DC étant introduits dans l'unité de commande (G).

5. Circuit de commande intégré, plus particulièrement ASIC ou micro-contrôleur, qui est conçu pour l'exécution d'un procédé selon l'une des revendications 3 ou 4.
